# EUROPEAN PATENT APPLICATION

(11) **EP 2 573 718 A1**
(43) Date of publication of application: **27.03.2013**
(21) Application number: 12184576.2
(22) Date of filing: 14.09.2012
(51) Int. Cl.: G06K 19/077, G06K 19/073

(54) **A secure RFID device and method of production**

(30) Priority: 23.09.2011 CH 15762011
(71) Applicant: HID Global Ireland Teoranta, Baile na hAbhann Galway (IE)
(72) Inventor: Doran, Paul Shane, Indreabhán / Galway (IE)
(74) Representative: Grosfillier, Philippe

(57) **Abstract**

The RFID device comprises an antenna (11) and a chip or chip module (14) which are electrically connected together in at least one connection zone. Said device comprises a marking applied at least partially in said connection zone in order to secure the connection between the antenna (11) and the chip or chip module (14).

The invention also concerns a method to produce such a RFID device.

## Description

### TECHNICAL FIELD

The present invention concerns a RFID device with at least an antenna and a chip or chip module which are electrically connected together in at least a connection zone.

More specifically, the present invention concerns a RFID device and a method for electrically connecting a module, for example a chip module, of a RFID device to an antenna whereby the RFID device comprises a security feature/step to improve the safety of the device against tampering.

### BACKGROUND ART

Many different techniques exist and are used today in the field of RFID to electrically connect a chip or chip module to an antenna when building an RFID device or card.

Here under is an overview of prior art techniques used in the field of RFID devices and cards.

### Thermosonic

The chip/die is picked from a wafer. Chip/die bumps are aligned with antenna terminals. A heating plate heats the etched antenna terminals. The die collet oscillates in the transverse direction at a frequency of 60 kHz for approximately 500ms. The transverse movement causes friction between the bumps and antenna terminals and the heat generated bonds the chip/die bumps to the antenna terminals.

### Mechanical Crimping

A module or wafer die is pre applied to an individual aluminium strap, the aluminium strap forms part of a long tape that is fed to a placement and mechanical crimping machine. The module strap is punched from the tape and placed on the etched antenna pads bridging the tracks of the antenna. The strap or antenna tracks are coated with an insulator usually screen printed, this will prevent electrical short circuit between the antenna tracks and the antenna pads. The mechanical crimping tool has hardened piercing teeth that pierce both the strap and antenna and connects them both together electrically and mechanically.

### Solder

The reflow solder method allows the module lead frame tabs to be soldered to antenna terminals. A hole for the module is punched in the substrate to take the module cap. A solder resist is applied over the antenna tracks by screen printing. The antenna terminals are kept free. Solder paste is applied to the antenna terminals by a precision dispenser. The module is punched from a tape and positioned with the tabs over the solder paste and the module cap in the punch hole of the carrier layer. Heat is applied to the tabs/solder paste with a solder stamp. The solder stamp causes the solder to melts. The solder is allowed to cool and creates a permanent electrical and mechanical connection between the antenna coil and module.

### Solder bump reflow

The wafer or flip chip bumps are positioned on the etched antenna terminals. The bump material is chosen to suit the bonding substrate. The solder is remelted by placing the assembled parts in a reflow oven or by exposure to a reflow laser. Low viscosity epoxy underfill is placed at two sides of the chip. The epoxy is drawn under the chip by capillary attraction. The underfill is then heat cured.

### Adhesive

### NCA

A non-conductive adhesive is for example a non conductive polymer. The adhesive is applied to the substrate material. The adhesive is applied using screen printing or with precision dispensing needles. The chip is picked from a sawn and bumped wafer or waffle pack by a die collect. The chip is held on the die collect with a vacuum. The chip die is aligned with the antenna pads using a microscope containing a semi reflective mirror or an automated vision system. The substrate material can be moved in the x and y directions precisely to aid alignment. The chip die is placed on the antenna pads and the glue is heated to cure. NCA adhesive is normally used where the bumps are irregular or Pd bumped.

### ACA

Anisotropic conductive adhesive is a polymer containing conductive particles. The adhesive is applied to the substrate material. The adhesive is applied using screen printing or with precision dispensing needles. The chip is picked from a sawn and bumped wafer or waffle pack by a die collet. The chip is held on the die collet with vacuum. The chip die is aligned with the antenna pads using a microscope containing semi reflective mirror or with an automated vision system. The substrate material can be moved in the x and y directions precisely to aid alignment. The die collect applies pressure and heat to the die, pads and adhesive. The result of the applied pressure and heat cause conductive path to form between the antenna pads and chip bumps in the Z direction only.

### ICA

Isotropic conductive adhesive is a polymer containing conductive particles. The adhesive is applied to the bond pads only. The adhesive is applied using screen printing or with precision dispensing needles. The chip is picked from a sawn and bumped wafer or waffle pack by a die collet. The chip die is held on the die collet with vacuum. The chip die is aligned with the antenna pads using a microscope containing semi reflective mirror or with an automated vision system. The substrate material can be moved in the x and y directions precisely to aid alignment. The die collect applies pressure and heat to the die, pads and adhesive. Electrical conductivity in the adhesive is in all directions. An underfill is also applied.

### Die Strap

The die is attached to a metal strap with anisotropic conductive adhesive. The strap is part of a long tape. The tape is fed into a punch, pick and placement machine. Insulation is placed on the antenna tracks in the strap attachment area. The metal strap is place on the antenna pads. The metal strap is in turn glued to the antenna pads with anisotropic conductive adhesive. The adhesive is heat cured.

### Cut and Clamping Technology

The lead frame is of the chip are punched through with a pointed tool, so crowns are formed. The module is then pressed onto the foil carrier so as the crowns penetrate the antenna pads. The peaks of the crowns are then pressed flat to make a permanent mechanical and electrical connection between the module and the antenna coil.

### Thermocompression Bonding

The wire embedding method of antenna manufacture involves laying down an 80µm - 112µm wire on a plastic or paper substrate. The method used is thermocompression bonding to attach the antenna wire to tabs of an electronic module. A tungsten electrode is used to weld the module tab and antenna wire together. The tungsten electrode is moved down in the Z axis direction and the wire and module tab are clamped between a ceramic pad and the electrode at a force between 1-10N, a DC current is then passed through the tungsten electrode. The tungsten electrode has high electrical resistance and is heated. The heat is transferred to both the wire and module, bonding them together. Once welding commences the displacement of the Z axis is monitored, once the set point displacement value is reached the welding cycle is stopped. The wire is cut by the electrode and bonding is now complete. The force required to remove the wire from the module tab on the completed bond is equal to approx 2N

Alternatively, diamond thermodes are used, which are indirectly electrically heated to a temperature of 500-600'C. The method used is thermocompression bonding, the diamond thermodes are moved downwards in the Z axis direction and the wire and module tab are clamped between the peek pads and the diamond thermodes. The heat is transferred to both the wire and module bonding them together. The wire is cut by two blades on the bonding head. The force required to remove the wire from the module tab on the completed bond is equal to approx 2N.

### Thermocompression Direct Bonding

Direct bonding currently involves bonding an 80-112µm wire to an expanded gold bumps bump on a wafer die. The wafer die is 2.7mm * 2.7mm in size and 50µm thick. The bump on the wafer is expanded from 80µm * 80µm to 400µm * 400µm. The wafer die is placed in an aluminium frame and the wire is bonded to it using tungsten electrode thermocompression bonding. The antenna is wire transferred to a pre-glued substrate

Other examples of bonding techniques are given in the following patent publications: EP 0 756 736, US 6,233,818, US 6,770,509, US 6,786,419 and US 2009/0033585.

### SUMMARY OF THE INVENTION

It is an aim of the present invention to improve the known techniques to electrically connect a chip or chip module to an antenna and the RFID device thus produced.

More specifically, it is an aim of the present invention to propose a method and a RFID device that has safety features for the bonded product.

A further aim of the present invention is to propose a safety product that allows a detection of tampering. Accordingly, the method of the present invention adds a marking or symbol (such a letters or another sign) to the zones where the electrical connection takes place, said symbol providing such safety feature. Any tampering, change of chip or chip module will be visible since the marking will be damaged or even removed.

In an embodiment, the RFID device may comprise an antenna and a chip or chip module which are electrically connected together in at least one connection zone. The RFID device may comprise a marking applied at least partially in said connection zone in order to secure the connection between the antenna and the chip or chip module.

In an embodiment, the antenna may comprise antenna terminals and the chip or chip module may comprise contacts. The contacts may be bonded to said antenna terminals in said at least one connection zone.

In an embodiment, the antenna terminals may be formed by end portions of the antenna, in particular, if the antenna is a wire, by wire portions near of the extremities of the wire.

In an embodiment, the marking may be a symbol, logo, letter(s), picture, guilloche, secure sign, watermark or a combination thereof or any other equivalent sign.

In an embodiment, the antenna and chip or chip module may be electrically connected together by welding and the welding mark may form the marking.

In an embodiment of the method of bonding a chip or chip module to an antenna to form a RFID device, said antenna and said chip or chip module may be electrically connected together in at least one connection zone. A marking may be applied at least partially over the said connection zone in order to secure the connection between the antenna and the chip or chip module.

In an embodiment, the marking step may be carried out at the same time as the connecting step or at a later stage.

In an embodiment, the connection may be achieved by welding using a parallel gap electrodes welding process.

In an embodiment, the marking may be carried out with electrodes used for the welding step such that the marking may take place at the same time as the connecting.

In an embodiment, the electrodes may be shaped such as to form a specific marking on the connection zone.

In an embodiment, the marking step is carried out by laser engraving.

### BRIEF DESCRIPTION OF THE DRAWINGS

The present invention will be better understood from a detailed description and from the attached drawings which show:
Figure 1 illustrates a device for carrying out the invention
Figure 2 illustrates an embodiment of electrodes and
Figure 3 illustrates a product produced with the method according to the present invention
Figure 4 illustrates a method of bonding a wire to a module and
Figure 5 illustrates another example of a product according to the present invention.

### DETAILED DESCRIPTION

In the fabrication process (see the above description) modules comprising a chip for RFID devices are attached/bonded to an etched/electrodeposited copper antenna using parallel gap welding.

The welding is required to provide electrical connection between the antenna and the module. The weld also holds the module in place during production and during the lifetime of the antenna. The parallel gap resistance welding leaves an imprint on the module post welding.

An idea according to the present invention is therefore to modify the design and shape of the parallel gap electrodes so they imprint a customized symbol(s), letter(s) or logo(s) into the module tabs. Logos and symbols can be imprinted in the same manner.

The imprinted symbol(s), letter(s) or logo(s) forms an extra security feature. Indeed, if a module is welded with an imprinted symbol(s), letter(s) or logo(s) it will be difficult to remove the module and re-weld it without leaving evidence of the previous imprinted symbol(s), letter(s) or logo(s).

Welding a symbol(s), letter(s) or logo(s) into an eGovernment product brings a clear advantage over the prior art products.

In more details, the invention makes uses of a constant force parallel gap welding head to imprint a recognisable symbol and at the same time weld the module (MCC8, MOA4, MOB4, etc) to an etched antenna.

According to the method, the module is punched and placed on the etched antenna terminals. The module is clamped between the electrodes and the antenna terminals.

After the force set point is reached, a high DC current supplied from the power supply is passed from the positive to negative electrode. The high DC current experience a high resistance path and therefore generates a large amount of heat. The heat welds the module lead frame to the antenna terminal. This process is repeated for the opposite antenna terminal.

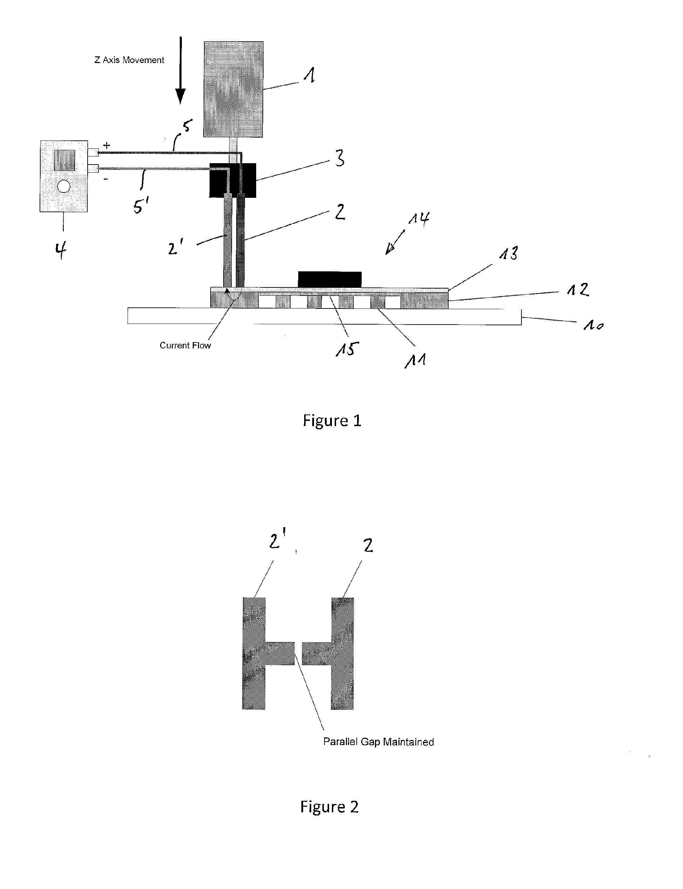

To imprint a symbol into the module lead frame the molybdenum parallel gap electrodes are machined to form the required shape. To imprint the letter H the electrode are shaped as shown in figure 2 for example. The electrodes are viewed end on. The parallel gap is maintained. Of course any other shape may be chosen according to circumstances.

A system for carrying out the invention is illustrated in figure 1. The device comprises an element 1 which applies a constant force along a Z (vertical) axis on the electrodes 2, 2' which may be held by an insulator 3. The electrodes 2, 2' are each connected to an electrical source 4, for example a DC power supply via cables 5, 5'.

On the side of the RFID device, there is a substrate 10 which carries an antenna 11, for example antenna turns as is usual in the present field of RFID devices, said turns ending in antenna terminals 12, 12' for the connection to the contacts 13, 13' of a chip module or chip 14. Preferably, there is some insulation 15 between the chip module 14 and the antenna 11 turns to avoid a short circuit.

An example of specific electrodes 2, 2' is illustrated in figure 2 as discussed here above which imprint the letter "H".

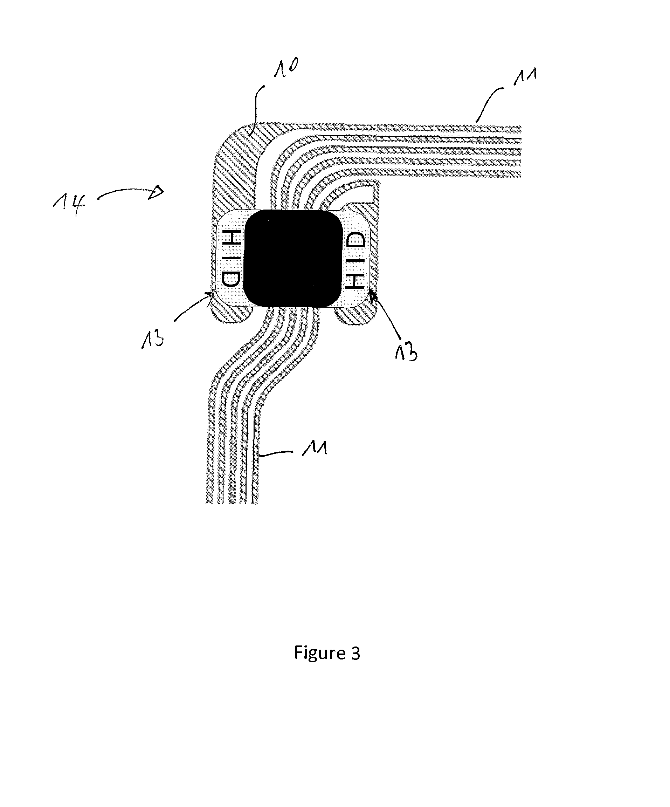

Figure 3 illustrates another example of realisation according to the principle of the invention where the parts identical/similar to the ones described in figure 1 are referenced with the same numbers. In this embodiment, the marking comprises the word "HID", which may be the name of the producer of the RFID device (for example a card).

As described above, the letters "HID" are formed in the surface of the electrodes which are applied on the contact areas when carrying out the welding of the contacts between chip and antenna.

As mentioned previously, any logo, letter, sign or combination or other information may be realized by the present invention and its principle with no limitation.

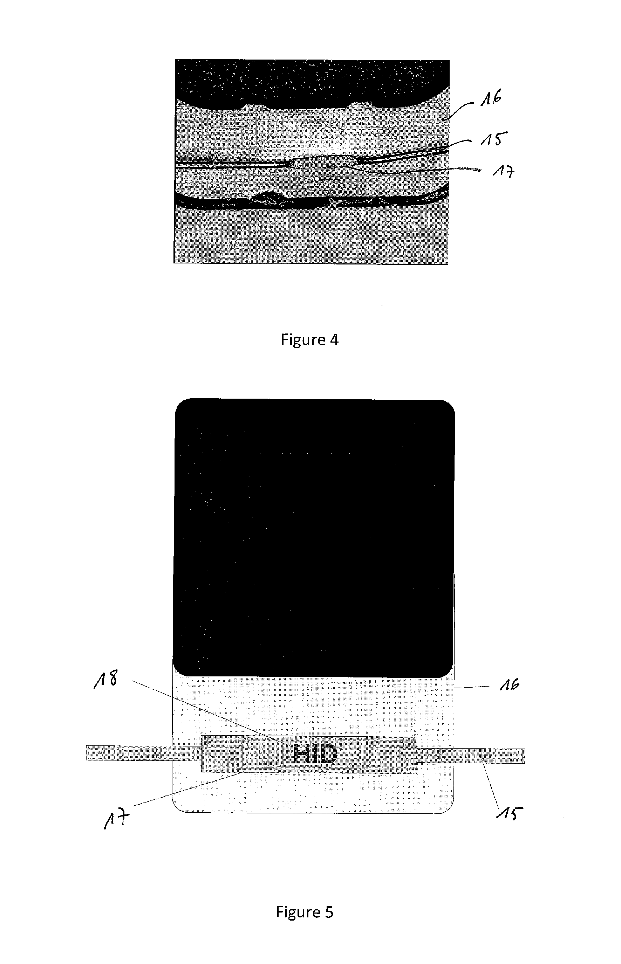

Figure 4 shows a picture of a standard thermo-compression weld performed with a tungsten electrode. Here the wire 15 is bonded to the module 16 (for example to a module tab) by passing direct current through a tungsten thermode. The tungsten thermode acts as a high resistance to the direct current. As the current passes through the latter is heated. The heated thermode is then pressed on the copper wire and this pressure compresses the wire and the wire is bonded to the tab of the module (at reference 17).

Once this weld is completed a marking 18 such as a logo or a symbol may be applied to the copper wire (preferably on the compressed part 17) as shown in figure 5. The marking could be applied by laser engraving or with a tungsten thermode orby another suitable technique.

It is possible to use the same tungsten thermode for welding and stamping (marking) at the same time and obtain the result of figures 4 and 5.

The present invention has been described by way of examples which should not be construed in a limiting manner. Variations are possible in the frame of the present scope for example by use of equivalent means. Also, the different embodiments may be combined together.

Typically, the RFID device may be a RFID card or inlay, or another RFID device where it is desired to add a safety feature according to the present invention.

The marking may be carried out as described above or by other means, for example by laser engraving. In such a case, the marking will generally be applied during a separate manufacturing step. This step will depends also on the quality and nature of the surface of the contacting zone, i.e. the type of antenna, chip or chips module, as the nature and the result of the connection process. It could be applied directly on the naked connections (of the antenna terminals and of the chip or chip module) or should be preceded by a coating step (for example with a cured resin). As alternative to laser engraving, a stamping of the coating is possible.

Other equivalent methods may be used equally to mark the connection zones in application of the teaching of the present invention as described herein.

## Claims

1. A RFID device comprising an antenna (11) and a chip or chip module (14) which are electrically connected together in at least one connection zone and wherein said device comprises a marking applied at least partially in said connection zone in order to secure the connection between the antenna (11) and the chip or chip module (14).

2. The RFID device of claim 1, wherein the antenna comprises antenna terminals (12, 12'), wherein the chip or chip module comprises contacts (14, 14') and wherein said contacts are bonded to said antenna terminals in said at least one connection zone.

3. The RFID device of claim 2, wherein the antenna terminals (14, 14') are formed by an end portions of the antenna, in particular, if the antenna is a wire, by wire portions near of the extremities of the wire.

4. The RFID device as defined in one of the preceding claims, wherein said marking is a symbol, logo, letter(s), picture, guilloche, secure sign, watermark or a combination thereof.

5. The RFID device as defined in one of the preceding claims, wherein said antenna and chip or chip module are electrically connected together by welding and wherein the welding mark forms the said marking.

6. A method of electrically connecting a chip or chip module (14) to an antenna (11) to form a RFID device as defined in claim 1, wherein said antenna and said chip or chip module are electrically connected together in at least one connection zone and wherein a marking is applied at least partially over the said connection zone in order to secure the connection between the antenna (11) and the chip or chip module (14).

7. The method as defined in claim 6, wherein the marking step is carried out at the same time as the connecting step or at a later stage.

8. The method as defined in one of the claims 6 or 7, wherein the connection is achieved by welding using a parallel gap electrodes welding process.

9. The method as defined in claim 8, wherein the marking is carried out with electrodes used for the welding step such that the marking takes place at the same time as the connecting.

10. The method as defined in claim 9, wherein the electrodes are shaped such as to form a specific marking on the connection zone.

11. The method as defined in one of the claims 6 to 8, wherein the marking step is carried out by laser engraving.
